(19) Europäisches Patentamt / European Patent Office / Office européen des brevets

(11) **EP 3 168 679 B1**

(12) **FASCICULE DE BREVET EUROPEEN**

(45) Date de publication et mention de la délivrance du brevet:
**04.09.2019 Bulletin 2019/36**

(51) Int Cl.:
**G02F 1/225** *(2006.01)*   **H04B 10/54** *(2013.01)*

(21) Numéro de dépôt: **16198558.5**

(22) Date de dépôt: **14.11.2016**

(54) **DISPOSITIF DE MODULATION DE L'INTENSITE D'UN SIGNAL OPTIQUE SUR QUATRE NIVEAUX DIFFÉRENTS**

VORRICHTUNG ZUR MODULIERUNG DER INTENSITÄT EINES OPTISCHEN SIGNALS AUF VIER VERSCHIEDENEN EBENEN

DEVICE FOR MODULATING THE INTENSITY OF AN OPTICAL SIGNAL ON FOUR DIFFERENT LEVELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2015 FR 1560976**

(43) Date de publication de la demande:
**17.05.2017 Bulletin 2017/20**

(73) Titulaire: **Commissariat à l'Énergie Atomique et aux Énergies Alternatives 75015 Paris (FR)**

(72) Inventeurs:
• **DUBRAY, Olivier**
  **38000 Grenoble (FR)**
• **BLAMPEY, Benjamin**
  **73410 Albens (FR)**
• **MENEZO, Sylvie**
  **38500 Voiron (FR)**

(74) Mandataire: **Colombo, Michel Innovation Competence Group 310, avenue Berthelot 69372 Lyon Cedex 08 (FR)**

(56) Documents cités:
**US-A1- 2008 219 614     US-A1- 2015 316 794**

• **SEYEDI M ASHKAN ET AL: "Data rate enhancement of dual silicon ring resonator carrier-injection modulators by PAM-4 encoding", 2015 INTERNATIONAL CONFERENCE ON PHOTONICS IN SWITCHING (PS), IEEE, 22 septembre 2015 (2015-09-22), pages 363-365, XP032799156, DOI: 10.1109/PS.2015.7329054**
• **DUBRAY O ET AL: "20Gb/s PAM-4 transmission from 35 to 90 DEG C by modulating a Silicon Ring Resonator Modulator with 2Vpp", 2015 OPTICAL FIBER COMMUNICATIONS CONFERENCE AND EXHIBITION (OFC), OSA, 22 mars 2015 (2015-03-22), pages 1-3, XP032784463,**

## Description

L'invention concerne un dispositif de modulation de l'intensité d'un signal optique sur quatre niveaux différents.

L'intensité d'un signal optique monochromatique est le produit du champ optique E de ce signal optique par le conjugué de ce champ optique E. Le champ optique correspond au champ électrique E dans le cadre des ondes électromagnétiques et des équations de Maxwell. Dans le cas d'un signal optique polychromatique, l'intensité optique se calcule pour chacune des longueurs d'ondes de ce signal. L'intensité du signal optique s'exprime en Watt.

La modulation de l'intensité d'un signal optique monochromatique sur quatre niveaux différents est connue sous l'acronyme 4-PAM (« 4-Pulse Amplitude Modulation »). La modulation 4-PAM module uniquement l'intensité du signal optique sur quatre niveaux différents et ne module pas sa phase. Elle présente l'avantage de simplifier la réalisation du récepteur. En effet, celui-ci doit uniquement mesurer un niveau d'intensité parmi seulement quatre niveaux différents pour démoduler le signal optique. Ainsi, ce récepteur est beaucoup plus simple que, par exemple, un récepteur mis en oeuvre dans le cadre d'une modulation QAM (Quadrature Amplitude Modulation). En effet, dans ce dernier cas, l'intensité et la phase du signal optique sont modulés. Il faut donc en plus synchroniser le fonctionnement du récepteur avec celui du dispositif de modulation afin de récupérer les informations codées dans l'intensité et la phase du signal optique reçu.

Dans le cas des signaux optiques polychromatiques, la modulation 4-PAM peut être mise en oeuvre simultanément pour plusieurs signaux optiques monochromatiques de longueurs d'ondes différentes qui composent le signal optique polychromatique. On désigne une telle modulation par l'acronyme 4-PAM-WDM (4-Pulse Amplitude Modulation - Wavelength Division Multiplexing).

Il a déjà été proposé, dans l'article suivant, un dispositif de modulation 4-PAM utilisant un modulateur à anneau résonant : Dubray O. et al., « 20 Gb/s PAM-4 transmission from 20 to 90°C by modulating a silicon ring resonator modulator with 2V», Optical Society of America, mars 2015. Par la suite, cet article est désigné par l'expression « Dubray2015 ».

Le dispositif de modulation de l'article Dubray2015 présente de nombreux avantages. En particulier, grâce à l'utilisation d'un modulateur à anneau résonant son encombrement est très faible. En particulier, son encombrement est beaucoup plus faible que celui des dispositifs de modulation 4-PAM utilisant des modulateurs Mach-Zender.

Par contre, pour mettre en oeuvre le dispositif de modulation 4-PAM décrit dans l'article Dubray2015, il faut générer un signal électrique de commande du modulateur à anneau résonant présentant quatre niveaux de tension différents. Chacun de ces niveaux de tension code deux bits d'information. Pour générer un tel signal électrique à partir d'un ou plusieurs signaux binaires d'informations à transmettre, il faut donc utiliser un convertisseur numérique-analogique. Or, de tels convertisseurs numérique-analogique sont extrêmement encombrants et consomme beaucoup d'énergie. Cela limite les possibilités d'application du dispositif de modulation 4-PAM décrit dans l'article Dubray2015.

De l'état de la technique est également connu de :

- SEYEDI M. ASHKAN et Al : « Data rate enhancement of dual silicon ring resonator carrier-injection modulators by PAM-4 encoding », 2015 International Conférence on Photonics in switching, IEEE, 22/9/2015, pages 363-365,
- US2008/219614A1,
- US2015/316794A1.

L'invention vise à remédier à cet inconvénient tout en conservant les avantages du dispositif de modulation 4-PAM de l'article Dubray2015 et, en particulier, un faible encombrement. Elle a donc pour objet un dispositif de modulation 4-PAM conforme à la revendication 1 ou 2.

Le dispositif de modulation 4-PAM ci-dessus comprend deux modulateurs à anneau résonant, chacun commandé par un signal binaire de commande. Ainsi, contrairement au dispositif de modulation 4-PAM décrit dans l'article Dubray 2015, il n'est pas nécessaire d'utiliser un signal électrique pouvant prendre quatre niveaux de tension différents. Il n'est dès lors pas nécessaire d'utiliser un convertisseur numérique-analogique capable de générer, à partir du ou des signaux binaires d'information à transmettre, un niveau de tension correspondant. Dans le dispositif de modulation revendiqué, le ou les signaux binaires d'information peuvent directement être transmis sur les ports de commande des modulateurs à anneaux résonants. Il n'est dès lors plus nécessaire d'utiliser un tel convertisseur numérique-analogique pour faire de la modulation 4-PAM tout en utilisant des modulateurs à anneau résonant. Dès lors, l'encombrement du dispositif revendiqué reste toujours bien plus petit que l'encombrement des dispositifs de modulation utilisant des modulateurs Mach-Zender. De plus, le dispositif revendiqué élimine la nécessité d'avoir à utiliser un convertisseur numérique-analogique encombrant pour le faire fonctionner.

Par ailleurs, le dispositif ci-dessus combine les signaux optiques issus du second port de sortie du premier modulateur à anneau résonant et du port de sortie du second modulateur à anneau résonant. Ainsi, quel que soit l'état du premier modulateur à anneau résonant, l'intensité du premier signal optique à moduler est toujours combinée de façon constructive avec l'intensité du second signal optique modulé. Grâce à cela, les quatre niveaux d'intensité du signal optique modulé s'étendent sur un large plage d'intensité ce qui facilite son décodage par les récepteurs.

Les modes de réalisation de ce dispositif peuvent présenter en outre les avantages suivants :

- Utiliser des déphaseurs optiques commandables pour minimiser le déphasage entre les signaux optiques à combiner par un assembleur optique permet de garder une sommation constructive des signaux optiques situés en entrée de l'assembleur optique et ainsi limiter les pertes de cet assembleur optique.
- Utiliser un accordeur électrique pour accorder le modulateur à anneau résonant sur la longueur d'onde du signal optique à moduler permet d'optimiser le fonctionnement de ce modulateur à anneau résonant et notamment d'augmenter son taux d'extinction.
- Utiliser des blocs de modulateurs à anneau résonant raccordés en série permet de faire de la modulation 4-PAM-WDM.
- Permuter l'ordre dans lequel sont placés les modulateurs à anneau résonant dans les blocs de modulateurs à anneau résonant permet de limiter le déphasage des signaux optiques reçus sur les entrées des assembleurs optiques.
- Placer un premier modulateur à anneau résonant avant le premier assembleur optique et un second modulateur à anneau résonant après ce premier assembleur optique permet d'espacer au maximum les quatre niveaux d'intensité. En plus, l'un des niveaux correspond à une intensité nulle ou négligeable.
- Le fait d'utiliser les ports « Drop » des deux modulateurs à anneau résonant permet de diminuer la variabilité du signal optique modulé sur quatre niveaux d'intensité différents.
- Utiliser un diviseur de puissance qui divise à part égal l'intensité du signal optique reçu permet d'espacer plus régulièrement les quatre niveaux d'intensité.

L'invention sera mieux comprise à la lecture de la description qui va suivre, donnée uniquement à titre d'exemple non limitatif et faite en se référant aux dessins sur lesquels :

- La figure 1 est une illustration schématique d'un dispositif de modulation 4-PAM ;
- La figure 2 est une illustration schématique d'un modulateur à anneau résonant utilisé dans le dispositif de la figure 1 ;
- Les figures 3 et 4 sont des graphiques représentant les fonctions de transfert du modulateur à anneau résonant de la figure 2 ;
- La figure 5 est un organigramme d'un procédé de modulation 4-PAM à l'aide du dispositif de la figure 1;
- Les figures 6 à 9 sont des illustrations schématiques de différentes variantes du dispositif de la figure 1.

Dans ces figures, les mêmes références sont utilisées pour désigner les mêmes éléments. Dans la suite de cette description, les caractéristiques et fonctions bien connues de l'homme du métier ne sont pas décrites en détails.

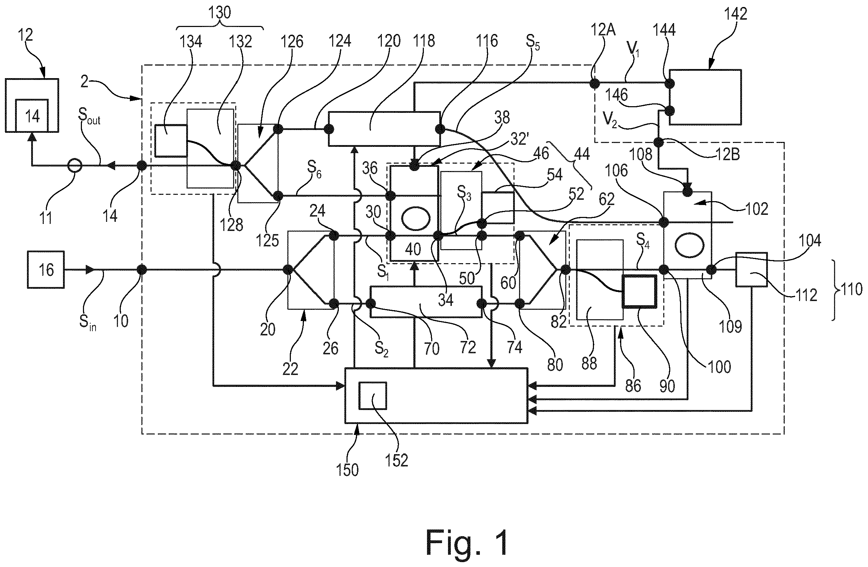

La figure 1 représente un dispositif 2 de modulation 4-PAM d'un signal optique monochromatique $S_{in}$ de longueur d'onde $\lambda_{in}$. Par exemple, dans ce mode de réalisation, la longueur d'onde $\lambda_{in}$ est comprise entre 1510 nm et 1590 nm ou entre 1270 nm et 1350 nm. Toutefois ce qui est décrit dans ce cas particulier fonctionne aussi pour d'autres longueurs d'onde.
Le dispositif 2 se présente typiquement sous la forme d'une puce électronique dans laquelle l'ensemble des composants optiques et électriques sont réalisés sur un même substrat semi-conducteur tel qu'un morceau de silicium. Les dimensions du dispositif 2 sont très petites. Par exemple, l'aire de la face sur laquelle sont réalisés tous ses composants est inférieure à 2,5 mm$^2$ ou 1 mm$^2$ ou 500 $\mu$m$^2$. Typiquement, le dispositif 2 est réalisé par les mêmes procédés de fabrication que ceux utilisés pour fabriquer les microprocesseurs ou autres dispositifs microélectroniques. Le dispositif 2 module l'intensité d'un signal $S_{in}$ en fonction de deux signaux binaires $V_1$ et $V_2$ d'information à transmettre pour obtenir un signal optique modulé $S_{out}$. Dans le signal $S_{out}$ chaque paire de bits, formée d'un bit du signal $V_1$ et d'un bit du signal $V_2$, est codée par un seul niveau d'intensité de ce signal.
Chaque signal binaire est typiquement un signal électrique dans lequel la valeur de chaque bit d'information est codée par un niveau de tension. Ce signal électrique est un signal binaire, c'est-à-dire que chaque bit d'information est codé par son propre niveau de tension et donc que chaque niveau de tension code seulement la valeur d'un seul bit d'information.
Le signal $S_{out}$ présente au maximum quatre niveaux d'intensité différents codant chacun une paire de bits différente. Le dispositif 2 n'utilise pas la phase du signal optique pour coder et transmettre des bits d'information.
Typiquement, le signal $S_{out}$ est transmis par l'intermédiaire d'une fibre optique 11 jusqu'à un récepteur 12. Pour décoder le signal $S_{out}$ reçu, le récepteur 12 a uniquement besoin d'un capteur 14 qui mesure l'intensité du signal $S_{out}$. Par exemple, le capteur 14 est un simple photo-détecteur. Ainsi, étant donné que l'information est uniquement codée par les quatre niveaux d'intensité, celle-ci est particulièrement simple à décoder du côté du récepteur 12.
A cet effet, le dispositif 2 comporte :

- une entrée 10 sur laquelle est reçu le signal $S_{in}$ à moduler ;

- des entrées 12A et 12B sur lesquelles sont reçus, respectivement, les signaux binaires $V_1$ et $V_2$ d'information ;
- une sortie 14 sur laquelle le dispositif 2 délivre le signal $S_{out}$ modulé en intensité en fonction des signaux $V_1$ et $V_2$.

L'entrée 10 est raccordée optiquement à une sortie d'une source laser 16 qui génère le signal $S_{in}$.

Dans ce texte, par « raccordé optiquement », on désigne le fait que deux composants optiques sont raccordés directement ou indirectement l'un à l'autre par l'intermédiaire d'un guide d'onde ou de plusieurs guides d'onde. Si les deux composants optiques sont réalisés sur un même substrat en silicium, ce guide d'onde est typiquement un guide d'onde en silicium entouré d'un matériau dont l'indice de réfraction est inférieur à celui du matériau du guide d'onde. De plus, par la suite, par l'expression « directement raccordé optiquement », on désigne le fait qu'un premier et un second composants optiques sont directement raccordés optiquement l'un à l'autre par un ou plusieurs guides d'onde non-instrumentés, c'est-à-dire incapables de modifier le signal optique qui les traverse en fonction d'un signal de commande externe.

La source laser 16 est par exemple un laser externe raccordé optiquement à l'entrée 10 par un coupleur fibre optique/guide d'onde. Le signal $S_{in}$ délivré par la source 16 n'est pas modulé en intensité ou en phase.

L'entrée 10 est directement raccordée optiquement à une entrée 20 d'un diviseur optique de puissance 22 équipé de deux sorties 24 et 26. Le diviseur 22 divise le signal $S_{in}$ en deux signaux optiques à moduler $S_1$ et $S_2$ délivrés, respectivement, par les sorties 24 et 26. Les deux signaux $S_1$ et $S_2$ sont identiques au signal $Si_n$ sauf qu'ils ont chacun une intensité inférieure à l'intensité du signal $Si_n$. Ici, les intensités des signaux $S_1$ et $S_2$ sont notées, respectivement, $P_1$ et $P_2$. L'intensité du signal $S_{in}$ reçu sur l'entrée 20 est notée $P_{in}$. La somme des intensités $P_1$ et $P_2$ est inférieure ou égale à l'intensité $P_{in}$. De préférence, la somme des intensités $P_1$ et $P_2$ est supérieure ou égale à $0,9 \times P_{in}$ ou $0,95 \times P_{in}$ ou $0,98 \times P_{in}$. Les intensités $P_1$ et $P_2$ sont chacune supérieure ou égale à $0,05 \times P_{in}$ et, de préférence, supérieure ou égale à $0,15 \times P_{in}$ ou $0,25 \times P_{in}$. Le diviseur 22 joue donc le rôle d'un diviseur d'intensité.

Dans ce mode de réalisation, l'intensité $P_{in}$ est répartie à parts égales entre les sorties 24 et 26. Les intensités $P_1$ et $P_2$ sont donc égales.

Le diviseur 22 est par exemple réalisée comme décrite dans l'article suivant : C. S. Hsiao et AL, « Design for beam splitting components employing silicon-on-insulator rib waveguide structures », Optics letter, C.S. Vol. 30, n°23, 1/12/2005.

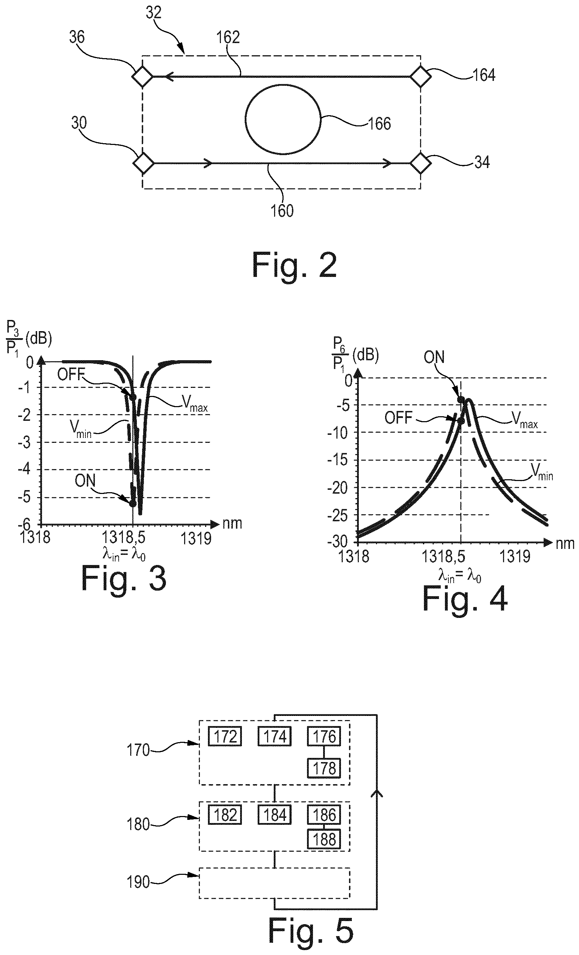

La sortie 24 est directement raccordée optiquement à un port d'entrée 30 d'un modulateur 32 à anneau résonant équipé de deux ports de sortie 34 et 36. Les modulateurs à anneau résonant sont bien connus et seuls quelques principes de réalisation et de fonctionnement sont rappelés en référence aux figures 2 à 4. Classiquement, les ports 30, 34 et 36 sont appelés, respectivement, port « In », port « Through» et port « Drop ». Les signaux optiques qui sortent des ports 34 et 36 sont appelés, respectivement, signal $S_3$ et signal $S_6$. Les intensités des signaux $S_3$ et $S_6$ sont notées, respectivement, $P_3$ et $P_6$. Le modulateur 32 comporte aussi un port 38 de commande.

Le modulateur 32 commute, en réponse à un signal électrique de commande reçu sur son port 38, entre un état éteint, classiquement appelé « Off », et un état allumé classiquement appelé « On ». Dans l'état « Off », l'intensité $P_3$ est maximale et l'intensité $P_6$ est minimale. Typiquement, dans l'état « Off », l'intensité $P_3$ est au moins supérieure à $0,5 \times P_1$ et, de préférence, supérieure à $0,8 \times P_1$ ou $0,9 \times P_1$ et l'intensité $P_6$ est au moins trois ou cinq fois inférieure à l'intensité $P_1$. A l'inverse, dans l'état « On », l'intensité $P_3$ est minimale et l'intensité $P_6$ est maximale. Typiquement, dans l'état « On », l'intensité $P_6$ est au moins supérieure à $0,5 \times P_1$ et, de préférence, supérieure à $0,8 \times P_1$ ou $0,9 \times P_1$ et l'intensité $P_3$ est au moins trois ou cinq fois inférieure à l'intensité $P_1$. A cause de ce comportement de l'intensité du signal $S_6$ par rapport à l'intensité du signal $S_3$, on dit que le signal $S_6$ est le signal complémentaire du signal $S_3$.

Le signal de commande reçu sur le port 38 est ici un signal électrique binaire $V_1$. La tension du signal $V_1$ varie donc uniquement entre deux niveaux de tension $V_{max}$ et $V_{min}$ qui code chacun une valeur d'un bit d'information. Par exemple, $V_{max}$ est égal à 0 Vdc et $V_{min}$ est égal à -3 Vdc. Le modulateur 32 est dans l'état « On » lorsque la tension du signal $V_1$ est égale à $V_{min}$ et dans l'état « Off » lorsque la tension du signal $V_1$ est égale à $V_{max}$. Ainsi, en réponse aux variations de tension du signal $V_1$, le modulateur 32 module simultanément les intensités des signaux $S_3$ et $S_6$.

Le modulateur 32 est associé à un accordeur électrique commandable 40 apte à modifier les fonctions de transfert $FT_{31}$ et $FT_{61}$ si de l'intensité entre les ports 30, 34 et 36. La fonction $FT_{31}$ est la fonction de transfert de l'intensité du signal optique entre les ports 32 et 34. Cette fonction $FT_{31}$ est représentée sur la figure 3. La fonction de transfert $FT_{61}$ est la fonction de transfert de l'intensité entre les ports 32 et 36. Cette fonction $FT_{61}$ est représentée sur la figure 4.

Plus précisément, l'accordeur 40 est capable de décaler la longueur d'onde $\lambda_0$ pour laquelle la fonction $FT_{31}$ présente un minimum . Cet accordeur est également capable de décaler en même temps la longueur d'onde $\lambda_0$ pour laquelle la fonction $FT_{61}$ présente un maximum. En effet, les fonctions $FT_{31}$ et $FT_{61}$ sont intimement liées et dépendent l'une de l'autre. Par exemple, à cet effet, l'accordeur 40 comporte un radiateur capable de chauffer et/ou de refroidir le modulateur 32. En effet, l'indice de réfraction de l'anneau du modulateur 32 varie en fonction de la température, ce qui modifie donc sa fonction de transfert.

Un capteur 44 de l'intensité $P_3$ est également prévu. Par exemple, le capteur 44 comporte un coupleur optique 46 à une entrée et deux sorties 50, 52 ainsi qu'un photo-détecteur 54 directement raccordé optiquement à la sortie 52.

L'entrée du coupleur optique 46 est directement raccordée optiquement à la sortie 34. La sortie 52 délivre un signal optique identique au signal $S_3$ mais dont l'intensité est une fraction seulement de l'intensité du signal $S_3$. Typiquement, l'intensité du signal optique délivré par la sortie 52 est inférieure à 10 % et, de préférence, inférieure à 5 % ou 3 % de l'intensité $P_3$. La sortie 50 renvoie la partie restante du signal $S_3$. Par la suite, l'intensité prélevée par le coupleur 46 sur le signal $S_3$ est considérée comme négligeable. Dès lors, l'intensité du signal $S_3$ délivré par la sortie 50 est considérée comme étant égale à l'intensité $P_3$ du signal $S_3$ délivré sur la sortie 34.

Le photo-détecteur 54 convertit le signal optique délivré sur la sortie 52 en une signal électrique représentatif de l'intensité $P_3$. C'est ce signal électrique qui constitue donc la mesure de l'intensité $P_3$.

La sortie 50 est directement raccordée optiquement à une entrée 60 d'un assembleur optique 62. Un assembleur optique est également connu sous le terme de « combineur optique » ou « combineur de champ optique ».

La sortie 26 du diviseur 22 est directement raccordée optiquement à une entrée 70 d'un déphaseur commandable 72. Le déphaseur 72 est capable de modifier la phase du signal $S_2$ en fonction d'un signal électrique d'ajustement. Le déphaseur 72 comprend aussi une sortie 74 sur laquelle il délivre le signal $S_2$ dont la phase a été ajustée. Par contre, le déphaseur 72 ne modifie pas l'intensité $P_2$ du signal $S_2$.

Un mode de réalisation possible du déphaseur 72 est décrit dans l'article suivant : Nicholas C. Harris et Al. , « Efficient, compact and low loss thermo-optic phase shifter in silicon », Optics Express, 2014.

Par exemple, dans un mode de réalisation particulier, le déphaseur 72 comporte :

- un guide d'onde traversé par le signal $S_2$, et
- un métal résistif disposé à proximité de ce guide d'onde.

En réponse au signal d'ajustement, une différence de potentiels est appliquée sur ce métal résistif, ce qui génère de la chaleur. Le métal résistif fait donc varier la température du guide d'onde et donc son indice de réfraction. Ceci modifie la phase du signal $S_2$ qui traverse ce guide d'onde.

La sortie 74 est directement raccordée optiquement à une entrée 80 de l'assembleur 62.

L'assembleur 62 comporte également une sortie 82 sur laquelle il délivre un signal optique $S_4$. Le signal $S_4$ résulte de la combinaison en champ des signaux $S_3$ et $S_2$. Ici, l'assembleur 62 est un sommateur de champs optiques. Il additionne donc les champs optiques des signaux $S_3$ et $S_2$ pour obtenir le signal $S_4$. Par exemple, l'assembleur 62 est un assembleur MMI (Multi-Mode Interference) à deux entrées 60, 80 et à une sortie 82. Un assembleur MMI est également parfois appelé « interféromètre ». Les assembleurs MMI sont bien connus. Par exemple, le lecteur intéressé peut se référer à l'article suivant : Lucas B. Soldano et al « Optical multi-mode interference devices based on self-imaging : principles and applications », Journal of Lightwave Technology, Volume 13, n° 4 avril 1995.

Pour limiter les pertes dans l'assembleur 62, les signaux optiques reçus sur les entrées 60 et 80 doivent de préférence être en phase. Ici, l'assembleur 62 est un coupleur MMI à - 3 dB de perte. Dès lors, l'intensité $P_4$ du signal $S_4$ en fonction des intensités $P_3$ et $P_2$ est donnée par la relation suivante lorsque les signaux $S_3$ et $S_2$ sont en phase au niveau des entrées 60 et 80 :

$$P_4 = ( \; \sqrt{P_3} \; + \; \sqrt{P_2} \; )^2/2.$$

Un capteur 86 de l'intensité $P_4$ est directement raccordé optiquement à la sortie 82 de l'assembleur 62. Ici, ce capteur 86 est identique au capteur 44. Il comporte donc une entrée directement raccordée optiquement à la sortie 82 et une sortie qui délivre le signal $S_4$ auquel une fraction négligeable de son intensité a été prélevée pour la mesure. Comme pour le capteur 44, le capteur 86 comporte un coupleur optique 88 et un photo-détecteur 90 identique, respectivement, au coupleur optique 46 et au photo-détecteur 54.

La sortie du capteur 86 est directement raccordée optiquement à un port 100 d'entrée d'un modulateur à anneau résonant 102. Ce modulateur 102 est par exemple identique au modulateur 32. Il comporte donc deux ports 104 et 106 de sortie. Les ports 100, 104 et 106 sont respectivement, les ports « In », « Through » et « Drop » du modulateur 102.

Le modulateur 102 comporte aussi un port 108 de commande qui reçoit le signal électrique binaire $V_2$ de commande. Le port 106 délivre un signal optique $S_5$ dont l'intensité est notée $P_5$.

De façon similaire à ce qui a été décrit pour le modulateur 32, le modulateur 102 est associé à un accordeur électrique commandable 109. Cet accordeur 109 est identique à l'accordeur 40 sauf qu'il est apte à modifier les fonctions de transfert du modulateur 102 et non pas celles du modulateur 32.

Seul un capteur 110 est directement raccordé optiquement au port 104 du modulateur 102. En particulier, aucun diviseur de puissance ou aucun coupleur optique n'est directement raccordé optiquement au port 104. Dès lors, dans ce mode de réalisation, le capteur 110 peut utiliser la totalité de l'intensité du signal délivré sur ce port 104 lorsque le modulateur 102 est dans son état « Off ». Par exemple, à cet effet, le capteur 110 comporte un photo-détecteur 112 directement raccordé optiquement au port 104.

Le port 106 est directement raccordé optiquement à une entrée 116 d'un déphaseur commandable 118. Le déphaseur 118 permet d'ajuster la phase du signal $S_5$ en fonction d'un signal d'ajustement. Le signal $S_5$ dont la phase

a été ajustée par le déphaseur 118 est délivré sur une sortie 120. Ici, la structure du déphaseur 118 est identique à celle du déphaseur 72.

La sortie 120 et le port 36 du modulateur 32 sont directement raccordés optiquement, respectivement, à des entrées 124 et 125 d'un assembleur optique 126. L'assembleur 126 recombine les signaux $S_5$ et $S_6$ en sommant leur champ optique et délivre le signal optique ainsi obtenu sur une sortie 128. Ici, l'assembleur 126 est, par exemple, identique au assembleur 62.

Un capteur 130 mesure l'intensité du signal optique délivré sur la sortie 128. Par exemple, le capteur 130 est identique au capteur 86 sauf que son entrée et sa sortie sont directement raccordés optiquement, respectivement, à la sortie 128 et à la sortie 14. Ainsi, le capteur 130 mesure l'intensité $P_{out}$ du signal $S_{out}$. Le coupleur et le photo-détecteur de ce capteur 130 portent, respectivement, les références numériques 132 et 134.

A titre d'illustration, dans ce mode de réalisation, les signaux $V_1$ et $V_2$ proviennent d'une source 142 de signaux électriques binaires externe au dispositif 2. La source 142 comporte deux sorties 144 et 146 électriquement raccordées, respectivement, aux entrées 12A et 12B pour fournir les signaux $V_1$ et $V_2$ au dispositif 2. Par exemple, la source 142 comporte deux microprocesseurs qui génèrent chacun, indépendamment de l'autre, l'un des signaux $V_1$ et $V_2$. Les sorties 146 et 148 de la source 142 peuvent aussi correspondre à deux sorties d'un démultiplexeur. Les entrées 12A et 12B sont raccordées électriquement, respectivement, aux ports 38 et 108.

Enfin, le dispositif 2 comporte un circuit électronique 150 d'ajustement de la phase des signaux $S_2$ et $S_5$ et de réglage des modulateurs 32 et 102. Le circuit 150 est raccordé électriquement aux capteurs 44, 86, 110 et 130 pour recevoir les intensités mesurées par ces capteurs. Le circuit 150 est également raccordé électriquement aux accordeurs 40 et 109 et aux déphaseurs 72 et 78 pour les commander. Par exemple, le circuit 150 comporte un microprocesseur 152 programmable réalisé sur le même substrat que les autres composants du dispositif 2. Ici, le microprocesseur 152 est programmé pour mettre en oeuvre le procédé de la figure 5.

La figure 2 représente de façon simplifiée l'architecture du modulateur 32. Le modulateur 32 comporte :

- un guide d'onde 160 qui raccorde optiquement directement le port 30 au port 34,
- un guide d'onde 162, par exemple parallèle au guide d'onde 160, qui raccorde optiquement un port 164 au port 36, et
- un anneau 166 situé entre les guides d'onde 160 et 162.

Le port 164 est connu sous le terme de port « Add ».

L'anneau 166 est couplé optiquement d'un côté au guide d'onde 160 et, d'un autre côté, au guide d'onde 162. Une description détaillée d'un tel anneau et de son fonctionnement est donnée dans l'annexe de la demande EP2843468. Par exemple, les caractéristiques du modulateur 32 sont les suivantes :

- le diamètre de l'anneau 166 est de 10 $\mu$m,
- l'efficacité du modulateur 32 est de 1,2 V.cm,
- les pertes optiques de l'anneau 162 sont de 15 dB/cm,
- le couplage optique en intensité entre l'anneau 166 et le guide 160 est égal à 3,7 %,
- le couplage optique en intensité entre l'anneau 166 et le guide 162 est égal à 2,1 %.

La figure 3 représente la fonction de transfert $FT_{31}$. Plus précisément, la figure 3 représente l'évolution du rapport des intensités $P_3/P_1$ en fonction de la longueur d'ondes $\lambda$ du signal optique reçu sur le port 32. La courbe désignée par l'indication $V_{min}$ est la fonction $FT_{31}$ lorsque le signal de commande est maintenu au niveau $V_{min}$. A l'inverse, la courbe désignée par le symbole $V_{max}$ est la fonction $FT_{31}$ obtenue lorsque le signal de commande est maintenu au niveau $V_{max}$. Sur la figure 3, les axes des abscisses et des ordonnées sont gradués, respectivement, en nanomètre et en décibel.

Les points désignés par les symboles « ON » et « OFF » sur la figure 3 correspondent aux valeurs du rapport $P_3/P_1$ dans, respectivement, l'état « On » et l'état « Off » du modulateur 32.

Sur la figure 3, lorsque le signal de commande est égal à $V_{min}$, le minimum de la fonction de transfert se produit pour une longueur d'ondes $\lambda_0$. Dans le cas particulier représenté sur cette figure, cette longueur d'onde $\lambda_0$ est égale à la longueur d'onde $\lambda_{in}$ du signal $S_{in}$. Dans ces conditions, on dit que le modulateur 32 est accordé sur le signal $S_{in}$. Lorsque la longueur d'onde $\lambda_{in}$ est égale à $\lambda_0$, dans l'état « On », l'intensité $P_3$ ne peut plus être diminuée par un nouveau réglage du modulateur 32. A l'inverse, l'application de la tension $V_{max}$ sur le port 38 décale vers la droite la fonction de transfert de sorte que la longueur d'onde $\lambda_{in}$ n'est plus égale à $\lambda_0$ et le rapport $P_3/P_1$ est maintenant plusieurs fois supérieur.

Dans ce mode de réalisation, le taux d'extinction du modulateur 32 pour le port 34, c'est-à-dire l'écart entre les valeurs en décibels du rapport $P_3/P_1$ dans les états, respectivement, « Off » et « On » est égal à 4 dB à plus ou moins 20 % près. Par exemple, le taux d'insertion du modulateur 32, c'est-à-dire l'écart entre 0 dB et la valeur en décibels du rapports $P_3/P_1$ dans l'état « Off » est égal à 1,3 dB à plus ou moins 20 % près.

La figure 4 représente la fonction de transfert $FT_{61}$. Sur le graphe de la figure 4, les mêmes notations que celles introduites pour le graphe de la figure 3 sont utilisées. Ce graphe représente l'évolution du rapport des intensités $P_6/P_1$ en fonction de la longueur d'onde du signal $S_1$. On remarque que dans l'état « On », le maximum de la fonction $FT_{61}$ est obtenu pour la longueur d'onde $\lambda_0$. De plus, comme pour la figure 3, la figure 4 est représentée dans le cas particulier où la longueur d'onde $\lambda_0$ est égale à la longueur d'onde $\lambda_{in}$. Ainsi, dans l'état « On », l'intensité $P_6$ ne peut plus être augmentée par un nouveau réglage du modulateur 32.

Par exemple, le taux d'extinction et le taux d'insertion du modulateur 32 pour le port 36 sont égaux, respectivement, à 4 dB et 4,1 dB à plus ou moins 20 % près.

Le fonctionnement du dispositif 2 va maintenant être décrit en référence au procédé de la figure 5.

Le procédé débute par une phase 170 de réglage des modulateurs 32 et 102. Pour cela, lors d'une étape 172, la source 142 est commandée pour maintenir pendant tout la durée de la phase 170, les modulateurs 32 et 102 dans leur état « On ». Autrement dit, les signaux $V_1$ et $V_2$ sont chacun maintenus à leur niveau $V_{min}$.

En parallèle, pendant toute la durée de la phase 170, lors d'une étape 174, les capteurs 44 et 110 mesurent les intensités des signaux optiques délivrés sur les ports, respectivement, 34 et 104. Ces capteurs transmettent les intensités mesurées au circuit 150.

Également en parallèle, lors d'une étape 176, le circuit 150 règle le modulateur 32. A cet effet, le circuit 150 commande l'accordeur 40 pour décaler progressivement la fonction de transfert $FT_{31}$ et en particulier, la longueur d'onde $\lambda_0$ pour laquelle cette fonction de transfert présente un minimum. Ainsi, quand la longueur d'onde $\lambda_0$ se rapproche de la longueur d'onde $\lambda_{in}$ du signal $S_{in}$, l'intensité mesurée en parallèle par le capteur 44 diminue. A l'inverse, dès que la longueur d'onde $\lambda_0$ s'éloigne de la longueur d'onde $\lambda_{in}$, l'intensité mesurée en parallèle par le capteur 44 augmente. Le circuit 150 fait donc varier la longueur d'onde $\lambda_0$ jusqu'à ce que celle-ci corresponde à un minimum de puissance mesurée par le capteur 44. Lorsque l'intensité mesurée par le capteur 44 est minimum, la longueur d'onde $\lambda_0$ est égale à la longueur d'onde $\lambda_{in}$ et le taux d'extinction du modulateur 32 est maximisé. Le signal de commande de l'accordeur 40 qui minimise l'intensité mesurée par le capteur 44 lorsque le modulateur 32 est dans l'état « On » est alors mémorisé.

Ensuite, lors d'une étape 178, le circuit 150 règle le modulateur 102. Cette étape 178 est identique à l'étape 176 sauf que ce sont le capteur 110 et l'accordeur 109 qui sont utilisés à la place, respectivement, du capteur 44 et de l'accordeur 40.

Ensuite, lors d'une phase 180, le circuit 150 ajuste les phases des signaux $S_2$ et $S_5$ pour que ces signaux soient en phase, au niveau des entrées 80 et 124, avec, respectivement, les signaux $S_3$ et $S_6$.

Pour cela, lors d'une étape 182, la source 142 est commandée pour maintenir pendant toute la durée de la phase 180 les modulateurs 32 et 102 dans leur état « Off ».

En parallèle, lors d'une étape 184, les capteurs 86 et 130 mesurent en permanence les intensités $P_4$ et $P_{out}$. Ces capteurs transmettent en temps réel leurs mesures au circuit 150.

Lors d'une étape 186, le circuit 150 ajuste la phase du signal $S_2$ pour qu'elle soit égale à la phase du signal $S_3$ au niveau des entrées de l'assembleur 62. Pour cela, le circuit 150 commande le déphaseur 72 pour faire varier progressivement la phase du signal $S_2$. Quand la phase du signal $S_2$ se rapproche de la phase du signal $S_3$ au niveau des entrées 60, 80, l'intensité mesurée par le capteur 86 augmente. A l'inverse, quand le déphasage entre les signaux $S_2$ et $S_3$ augmente au niveau des entrées 60 et 80, l'intensité mesurée par le capteur 86 décroît. Le circuit 150 fait donc varier le signal d'ajustement du déphaseur 72 jusqu'à trouver le signal d'ajustement qui maximise l'intensité mesurée par le capteur 86. Ce signal d'ajustement trouvé est ensuite mémorisé.

Ensuite, lors d'une étape 188, le circuit 150 ajuste la phase du signal $S_5$ pour qu'il soit en phase avec le signal $S_6$ au niveau des entrées de l'assembleur 126. L'étape 188 est identique à l'étape 186 sauf que c'est le déphaseur 118 et le capteur 130 qui sont utilisés à la place du déphaseur 72 et du capteur 86.

Une fois que le dispositif 2 a été calibré, le procédé se poursuit par une phase 190 de modulation de l'intensité du signal $S_{in}$ sur quatre niveaux différents en fonction des signaux $V_1$ et $V_2$ à transmettre. Pendant toute la durée de cette phase 190, le circuit 150 applique sur les modulateurs 32 et 102 le signal de réglage mémorisé lors de la phase 170 et applique également le signal d'ajustement mémorisé lors de la phase 180 sur les déphaseurs 72 et 118.

Lors de la phase 190, les signaux $V_1$ et $V_2$ sont appliqués aux ports d'entrée 38 et 108 des modulateurs 32 et 102 respectivement.

En parallèle, la source laser 16 génère le signal $S_{in}$ et le transmet sur l'entrée 10 du dispositif 2. Le signal $S_{in}$ est ensuite divisé en deux signaux $S_1$ et $S_2$ de même puissance par le diviseur 22. L'intensité du signal $S_1$ est alors modulée par le modulateur 32 en fonction du signal de commande $V_1$ de manière à obtenir le signal optique modulé $S_3$. Le signal $S_3$ est ensuite combiné avec le signal $S_2$ par l'assembleur 62 pour obtenir le signal $S_4$ reçu sur le port 100 du modulateur 102. En même temps, le signal complémentaire du signal $S_3$, c'est-à-dire le signal $S_6$, est délivré sur le port 36.

Le module 102 module à nouveau l'intensité du signal $S_4$ mais cette fois-ci en fonction du signal de commande $V_2$ pour obtenir le signal $S_5$.

Les signaux $S_5$ et $S_6$ sont alors combinés ensemble par l'assembleur 126 pour obtenir le signal $S_{out}$ dont l'intensité est modulée sur quatre niveaux différents. Dans le signal $S_{out}$, chaque niveau d'intensité code à la fois la valeur d'un bit du signal $V_1$ et d'un bit du signal $V_2$.

Le tableau suivant présente pour chaque combinaison possible des états des modulateurs 32 et 102, les valeurs des intensités $P_1$ à $P_6$ et $P_{out}$ calculées pour une puissance $P_{in}$ du signal $S_{in}$. Pour simplifier ce calcul, les pertes d'intensités dans les composants optiques du dispositif 2 ont toutes été négligées sauf celles causées par les assembleurs optiques 62 et 130. Par la suite, pour le calcul de l'intensité $P_{out}$ du signal $S_{out}$, la contribution de l'intensité minimum des signaux optiques $S_3$, $S_5$ et $S_6$ est considérée comme négligeable. Ainsi, dans le tableau ci-dessous, l'intensité minimum de ces signaux est prise égale à 0 W.

| Référence numérique du modulateur | 32 | 102 | 32 | 102 | 32 | 102 | 32 | 102 |
|---|---|---|---|---|---|---|---|---|
| État | Off | Off | On | Off | Off | On | On | On |
| $P_1$ | $P_{in}/2$ | | $P_{in}/2$ | | $P_{in}/2$ | | $P_{in}/2$ | |
| $P_2$ | $P_{in}/2$ | | $P_{in}/2$ | | $P_{in}/2$ | | $P_{in}/2$ | |
| $P_3$ | $P_{in}/2$ | | 0 | | $P_{in}/2$ | | 0 | |
| $P_4$ | $P_{in}$ | | $P_{in}/4$ | | $P_{in}$ | | $P_{in}/4$ | |
| $P_5$ | 0 | | 0 | | $P_{in}$ | | $P_{in}/4$ | |
| $P_6$ | 0 | | $P_{in}/2$ | | 0 | | $P_{in}/2$ | |
| $P_{out}$ | 0 | | $P_{in}/4$ | | $P_{in}/2$ | | $0{,}73 \times P_{in}$ | |

La plage d'intensité sur laquelle sont répartis les quatre niveaux d'intensité s'étend donc de 0 à $0{,}73 \times P_{in}$. De plus, les quatre niveaux d'intensité possibles sont pratiquement uniformément répartis sur cette plage d'intensité.

A intervalles prédéterminés, le circuit 150 réitère de nouveau les phases 170 et 180 pour adapter en permanence la calibration du dispositif 2 aux conditions de fonctionnement actuel de ce dispositif 2.

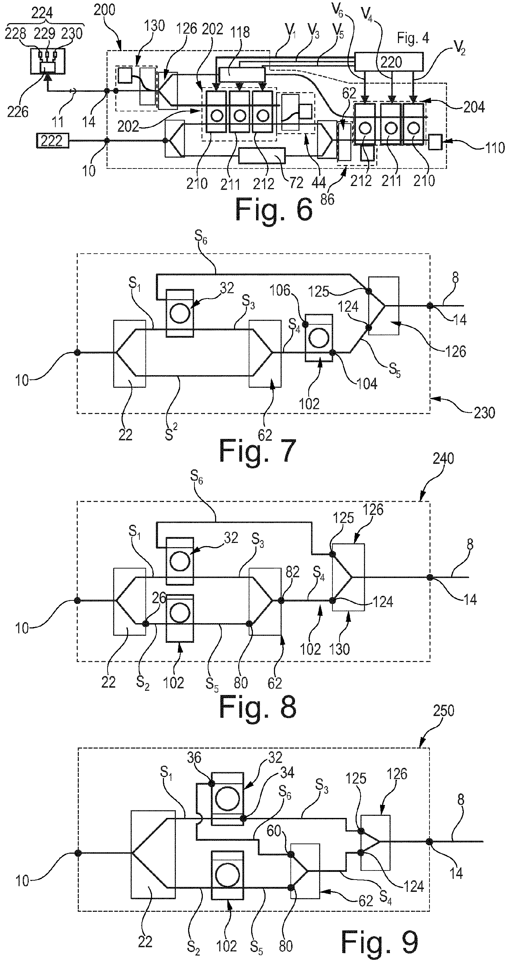

La figure 6 représente un dispositif 200 de modulation 4-PAM-WDM (Wavelength Division Multiplexing). Le dispositif 200 est identique au dispositif 2 sauf que les modulateurs 32 et 102 sont remplacés chacun par des blocs, respectivement 202 et 204, de modulateurs à anneau résonant. Chaque bloc 202, 204 comporte N modulateurs à anneau résonant raccordés optiquement en série les uns après les autres, où N est un entier strictement supérieur ou égal à deux. Par « raccordés en série », on désigne ici le fait que :

- le port « Through » du modulateur précédent est directement raccordé optiquement au port « In » du modulateur suivant, et
- le port « Add » du modulateur précédent est directement raccordé optiquement au port « Drop » du modulateur suivant.

Ici, le bloc 202 comporte trois modulateurs à anneau résonant 210 à 212. Ces modulateurs 210 à 212 sont identiques au modulateur 32 sauf que les longueurs d'onde, notées respectivement $\lambda_1$, $\lambda_2$ et $\lambda_3$, pour lesquelles leurs fonctions de transfert présentent un minimum sont différentes. Ici, les longueurs d'ondes $\lambda_1$, $\lambda_2$ et $\lambda_3$ sont espacées les unes des autres par un intervalle $\Delta$ supérieur ou égal à 1 nm et, de préférence, supérieur ou égal à 2 ou 5 nm. De plus, généralement, l'intervalle $\Delta$ est inférieur ou égal à 10 nm ou 15 nm. Ainsi, le modulateur 210 est incapable de moduler l'intensité des signaux optiques aux longueurs d'ondes $\lambda_2$ et $\lambda_3$. Il en est de même pour les modulateurs 211 et 212 qui ne peuvent pas moduler le signal optique à la longueur d'onde $\lambda_1$. Dès lors, le fait de mettre en série les modulateurs 210 à 212 ne change en rien le procédé de modulation pour une longueur d'onde donnée du signal $S_{in}$.

Le bloc 204 comporte les mêmes modulateurs 210 à 212 raccordés en série. Toutefois, ici, dans le sens de circulation du signal optique qui passe par les ports « Through » de ces modulateurs, les modulateurs 210 à 212 sont disposés en sens inverse par rapport à ce qui a été fait dans le bloc 202.

Chacun des modulateurs des blocs 202 et 204 est commandé par son propre signal électrique binaire de commande. Ici, ces signaux électriques binaires de commande sont notés $V_1$, $V_2$, $V_3$, $V_4$, $V_5$ et $V_6$. Pour générer ces signaux $V_1$, $V_2$, $V_3$, $V_4$, $V_5$ et $V_6$, la source 142 est remplacée par une source 220 de signaux électriques binaires qui génère les six signaux $V_1$ à $V_6$.

Pour simplifier la figure 6, le circuit électronique de commande et les accordeurs électriques associés à chacun des modulateurs 210 à 212 n'ont pas été représentés. Tout ce qui a été décrit en référence aux accordeurs 40 et 109 et au circuit 150 du dispositif 2 peut être transposé sans difficulté au mode de réalisation de la figure 6.

Pour chaque longueur d'ondes $\lambda_1$, $\lambda_2$ et $\lambda_3$, le fonctionnement du dispositif 200 est le même que celui du dispositif 2. On notera toutefois que dans le cas du dispositif 200, la source laser 16 doit être remplacée par une source laser 222 multichromatique qui génère simultanément trois signaux optiques monochromatiques non modulés aux longueurs d'onde $\lambda_1$, $\lambda_2$ et $\lambda_3$. Par exemple, à cet effet, la source 222 comporte trois sources monochromatiques de longueurs d'ondes différentes multiplexées. De même, le récepteur 12 doit être remplacé par un récepteur 224. Le récepteur 224 comporte typiquement un démultiplexeur 226 en longueur d'onde qui isole les signaux optiques aux longueurs d'onde $\lambda_1$, $\lambda_2$ et $\lambda_3$. Ce démultiplexeur 226 transmet ensuite le signal optique isolé à chacune de ces longueur d'onde $\lambda_1$, $\lambda_2$ et $\lambda_3$ à des photo-détecteurs respectifs 228 à 230.

Il est possible d'agencer différemment les modulateurs et les assembleurs optiques du dispositif 2 pour obtenir des variantes de ce dispositif 2 qui présentent les mêmes avantages et, notamment, un faible encombrement et quatre niveaux d'intensité répartis sur une large plage d'intensité. Trois exemples de telles variantes sont représentés sur les figures 7 à 9. Pour simplifier la description de ces variantes d'agencement, sur les figures 7 à 9, seule le diviseur 22, les assembleurs 62 et 126 et les modulateurs 32 et 102 sont représentés. L'agencement des autres composants optiques ou électriques peut facilement être déduit de la description du dispositif 2.

La figure 7 représente un dispositif 230 de modulation 4-PAM identique au dispositif 2 sauf que les rôles des ports 104 et 106 du modulateur 102 ont été inversés. Ainsi, le port 104 est optiquement raccordé à l'entrée 124 de l'assembleur 126. A l'inverse, le port 106 n'est plus raccordé optiquement à cette entrée 124. Par exemple, le port 106 est seulement raccordé optiquement au capteur 110. Dans ce mode de réalisation, le signal $S_5$ est délivré par le port 104 et non plus par le port 106.

Le tableau ci-dessus résume les valeurs des intensités $P_1$ à $P_6$ et $P_{out}$ obtenues pour les différents états possibles des modulateurs 32 et 102 du dispositif 230.

| Référence numérique du modulateur | 32 | 102 | 32 | 102 | 32 | 102 | 32 | 102 |
|---|---|---|---|---|---|---|---|---|
| État | Off | Off | On | Off | Off | On | On | On |
| $P_1$ | $P_{in}/2$ | | $P_{in}/2$ | | $P_{in}/2$ | | $P_{in}/2$ | |
| $P_2$ | $P_{in}/2$ | | $P_{in}/2$ | | $P_{in}/2$ | | $P_{in}/2$ | |
| $P_3$ | $P_{in}/2$ | | 0 | | $P_{in}/2$ | | 0 | |
| $P_4$ | $P_{in}$ | | $P_{in}/4$ | | $P_{in}$ | | $P_{in}/4$ | |
| $P_5$ | $P_{in}$ | | $P_{in}/4$ | | 0 | | 0 | |
| $P_6$ | 0 | | $P_{in}/2$ | | 0 | | $P_{in}/2$ | |
| $P_{out}$ | $P_{in}/2$ | | $0,73 \times P_{in}$ | | 0 | | $P_{in}/4$ | |

Dans le dispositif 230, le port 106 du modulateur 126 n'est pas utilisé. Cela accroît la variabilité du signal $S_{out}$.

La figure 8 représente un dispositif 240 identique au dispositif 2 sauf que le modulateur 102 a été placé entre la sortie 26 du diviseur 22 et l'entrée 80 de l'assembleur 62. Il n'y a donc plus de modulateur situé entre la sortie 82 de l'assembleur 62 et l'entrée 124 de l'assembleur 126. Dans ce mode de réalisation, l'assembleur 62 combine les signaux $S_3$ et $S_5$ et l'assembleur 126 combine les signaux $S_4$ et $S_6$.

Le tableau ci-dessous résume les valeurs des intensités $P_1$ à $P_6$ et $P_{out}$ obtenues pour les différents états possibles des modulateurs 32 et 102 du dispositif 240.

| Référence numérique du modulateur | 32 | 102 | 32 | 102 | 32 | 102 | 32 | 102 |
|---|---|---|---|---|---|---|---|---|
| État | Off | Off | On | Off | Off | On | On | On |
| $P_1$ | $P_{in}/2$ | | $P_{in}/2$ | | $P_{in}/2$ | | $P_{in}/2$ | |
| $P_2$ | $P_{in}/2$ | | $P_{in}/2$ | | $P_{in}/2$ | | $P_{in}/2$ | |
| $P_3$ | $P_{in}/2$ | | 0 | | $P_{in}/2$ | | 0 | |
| $P_4$ | $P_{in}$ | | $P_{in}/4$ | | $P_{in}/4$ | | 0 | |
| $P_5$ | $P_{in}/2$ | | $P_{in}/2$ | | 0 | | 0 | |
| $P_6$ | 0 | | $P_{in}/2$ | | 0 | | $P_{in}/2$ | |
| $P_{out}$ | $P_{in}/2$ | | $0,73 \times P_{in}$ | | $P_{in}/8$ | | $P_{in}/4$ | |

Comme le montre le tableau ci-dessus, dans le mode de réalisation de la figure 8, les quatre niveaux d'intensité

du signal $S_{out}$ sont moins espacés les uns des autres que dans les modes de réalisations précédents. De plus, dans ce mode de réalisation, aucun des niveaux d'intensité n'est égal à zéro.

La figure 9 représente un dispositif 250 identique au dispositif 240 sauf que :

- le port 34 du modulateur 32 est directement raccordé optiquement à l'entrée 125 de l'assembleur 126, et
- le port 36 du modulateur 32 est directement raccordé optiquement à l'entrée 60 de l'assembleur 62.

Le tableau ci-dessus indique les valeurs des intensités $P_1$ à $P_6$ et $P_{out}$ obtenues pour les différents états possibles des modulateurs 32 et 102 du dispositif 250.

| Référence numérique du modulateur | 32 | 102 | 32 | 102 | 32 | 102 | 32 | 102 |
|---|---|---|---|---|---|---|---|---|
| État | Off | Off | On | Off | Off | On | On | On |
| $P_1$ | $P_{in}/2$ | | $P_{in}/2$ | | $P_{in}/2$ | | $P_{in}/2$ | |
| $P_2$ | $P_{in}/2$ | | $P_{in}/2$ | | $P_{in}/2$ | | $P_{in}/2$ | |
| $P_3$ | $P_{in}/2$ | | 0 | | $P_{in}/2$ | | 0 | |
| $P_4$ | $P_{in}/4$ | | $P_{in}$ | | 0 | | $P_{in}/4$ | |
| $P_5$ | $P_{in}/2$ | | $P_{in}/2$ | | 0 | | 0 | |
| $P_6$ | 0 | | $P_{in}/2$ | | 0 | | $P_{in}/2$ | |
| $P_{out}$ | $0{,}73 \times P_{in}$ | | $P_{in}/2$ | | $P_{in}/4$ | | $P_{in}/8$ | |

Dans chaque mode de réalisation, le rôle et les raccordements optiques des deux ports de sortie du même modulateur peuvent être inversés. C'est par exemple ce qui a été fait pour passer du mode de réalisation de la figure 8 à celui de la figure 9.

De nombreux autres modes de réalisation sont possibles. Par exemple, le diviseur 22 peut être remplacé par tout autre type de composant optique permettant de diviser l'intensité du signal $S_{in}$. En particulier, ce diviseur de puissance peut être remplacé par une jonction en Y.

Il n'est pas nécessaire que le diviseur 22 répartisse uniformément l'intensité du signal $S_{in}$ entre les signaux $S_1$ et $S_2$. En variante, les intensités des signaux $S_1$ et $S_2$ sont différentes. Par exemple, de préférence, l'intensité $P_1$ est strictement supérieure à l'intensité $P_2$. Ainsi, dans d'autres modes de réalisation, l'intensité $P_1$ est supérieure à $1{,}5 \times P_2$ ou $2 \times P_2$. Par exemple, dans un cas particulier, l'intensité $P_1$ est égale à $2/3 \times P_{in}$ et l'intensité $P_2$ est égale à $1/3 \times P_{in}$. Dans ce cas, les quatre niveaux d'intensité ne sont plus uniformément espacés les uns des autres.

Les assembleurs optiques tels que les assembleurs 62 et 126 peuvent présenter des pertes différentes de -3 dB. Par exemple, il existe des assembleurs optiques dont les pertes sont supérieures ou, au contraire, inférieures. Ces assembleurs peuvent être utilisés à la place des assembleurs 62 et 126.

A la place des modulateurs décrits, il est possible d'utiliser des modulateurs identiques mais dans lesquels l'état « On » est obtenu lorsque la tension appliquée sur le port de commande est égale à $V_{min}$ et l'état « Off » est obtenu en appliquant la tension $V_{max}$. Il faut alors adapter le signal de commande en conséquence si nécessaire.

Le signal binaire de commande des modulateurs n'est pas nécessairement un signal électrique. En variante, il est remplacé par un signal mécanique qui fait commuter un modulateur entre ses états « Off » et « On ».

La fibre 11 peut être remplacée par un guide d'onde en silicium ou en polymère réalisé sur la même puce que celle du dispositif 2 si le récepteur 12 se trouve lui-aussi sur cette puce.

Dans le dispositif 200, l'ordre dans lequel les modulateurs à anneau résonant sont raccordés les uns après les autres dans chaque bloc 202, 204, peut être modifié.

Il existe de nombreux modes de réalisation possibles pour les modulateurs à anneau résonant 32 et 102. Par exemple, en variante, chacun de ces modulateurs est réalisé comme décrit dans la demande EP2843468. Dans ce cas, chaque modulateur ne modifie pas la phase du signal optique qu'il module en intensité. Dès lors, les déphaseurs 72 et 118 et les capteurs 86 et 130 peuvent être omis car ils ne sont plus nécessaires.

Les déphaseurs 72 et 118 peuvent être raccordés sur l'autre entrée de l'assembleur. Dans une autre variante, un déphaseur est placé avant chaque entrée des assembleurs 62 et 126. D'autre modes de réalisation d'un déphaseur optique sont possibles. Par exemple, un tel autre mode de réalisation est décrit dans la demande EP1782123.

Il est également possible d'omettre un ou plusieurs des déphaseurs optiques. Par exemple, il est possible d'omettre le déphaseur 72 si la longueur du guide d'onde entre la sortie 24 et l'entrée 80 a été ajustée pour compenser le déphasage introduit par le modulateur 32. En procédant de même, il est aussi possible d'omettre le déphaseur 118.

Dans un autre mode de réalisation, au moins l'un des accordeurs 40, 109 est omis. Dans ce cas, le capteur 44 ou 110 utilisé pour commander cet accordeur est également omis.

Le capteur 44 peut être directement raccordé au port 36 pour mesurer l'intensité $P_6$ au lieu de l'intensité $P_3$. Dans ce cas, le modulateur 32 est accordé sur la longueur d'onde $\lambda_{in}$ lorsque l'intensité du signal $S_6$ est maximale et que le modulateur 32 est dans son état « On ».

## Revendications

1. Dispositif de modulation de l'intensité d'un signal optique sur quatre niveaux différents, **caractérisé en ce que** ce dispositif comporte :

   - un diviseur de puissance (22) comportant une entrée (20) pour recevoir le signal optique initial à moduler et des première et seconde sorties (24, 26) qui délivrent chacune, respectivement, des premier et second signaux optiques à moduler, l'intensité de chacun de ces premier et second signaux optiques à moduler étant égale à une fraction non nulle de l'intensité du signal optique initial reçu sur l'entrée (20) du diviseur de puissance,
   - un premier modulateur (32 ; 210 - 212) à anneau résonant comportant :

     • un port (30) d'entrée raccordé optiquement à la première sortie (24) du diviseur de puissance (22) pour recevoir le premier signal optique à moduler,
     • un premier port (34) de sortie apte à délivrer un premier signal optique modulé en intensité, construit en modulant l'intensité du signal optique reçu sur le port (30) d'entrée entre seulement un niveau haut et un niveau bas,
     • un port (38) de commande apte à recevoir un premier signal binaire de commande en réponse auquel le premier modulateur à anneau résonant fait varier l'intensité du premier signal optique à moduler entre les niveaux haut et bas pour obtenir le premier signal optique modulé,
     • un second port (36) de sortie apte à délivrer un signal optique complémentaire du premier signal optique modulé, l'intensité du signal optique complémentaire étant au niveau bas lorsque l'intensité du premier signal optique modulé est au niveau haut et vice-versa,

   - un premier assembleur optique (62) comportant :

     • une première entrée (60) raccordée optiquement au premier port de sortie du premier modulateur (32) à anneau résonant pour recevoir le premier signal optique modulé,
     • une seconde entrée (80) raccordée optiquement à la seconde sortie du diviseur de puissance (22), et
     • une sortie (82) pour restituer un premier signal optique combiné construit en combinant les champs optiques des signaux optiques reçus sur les première et seconde entrées du premier assembleur optique,

   - un second modulateur (102 ; 210 - 212) à anneau résonant comportant :

     • un port (100) d'entrée raccordé optiquement à la sortie (82) du premier assembleur optique pour recevoir le premier signal optique combiné,
     • un port (104, 106) de sortie apte à délivrer un second signal optique modulé construit en modulant l'intensité du signal optique reçu sur son port d'entrée entre seulement un niveau haut et un niveau bas,
     • un port (108) de commande apte à recevoir un second signal binaire de commande en réponse auquel le second modulateur à anneau résonant fait varier l'intensité du signal optique reçu sur son port d'entrée entre les niveaux haut et bas pour obtenir le second signal optique modulé,

   - un second assembleur optique (126) comportant :

     • une première entrée (124) raccordée optiquement au port de sortie du second modulateur à anneau résonant,
     • une seconde entrée (125) raccordée optiquement au second port de sortie du premier modulateur à anneau résonant, et
     • une sortie (128) apte à délivrer le signal optique dont l'intensité est modulée sur quatre niveaux différents construit en combinant les signaux optiques reçus sur ses première et seconde entrées.

2. Dispositif de modulation de l'intensité d'un signal optique sur quatre niveaux différents, **caractérisé en ce que** ce dispositif comporte :

- un diviseur de puissance (22) comportant une entrée pour recevoir le signal optique initial à moduler et des première et seconde sorties qui délivrent chacune, respectivement, des premier et second signaux optiques à moduler, l'intensité de chacun de ces premier et second signaux optiques à moduler étant égale à une fraction non nulle de l'intensité du signal optique initial reçu sur l'entrée du diviseur de puissance,
- un premier modulateur (32) à anneau résonant comportant :

  • un port d'entrée raccordé optiquement à la première sortie du diviseur de puissance (22) pour recevoir le premier signal optique à moduler,
  • un premier port de sortie apte à délivrer un premier signal optique modulé en intensité, construit en modulant l'intensité du signal optique reçu sur le port d'entrée entre seulement un niveau haut et un niveau bas,
  • un port de commande apte à recevoir un premier signal binaire de commande en réponse auquel le premier modulateur à anneau résonant fait varier l'intensité du premier signal optique à moduler entre les niveaux haut et bas pour obtenir le premier signal optique modulé,
  • un second port de sortie apte à délivrer un signal optique complémentaire du premier signal optique modulé, l'intensité du signal optique complémentaire étant au niveau bas lorsque l'intensité du premier signal optique modulé est au niveau haut et vice-versa,

- un second modulateur (102) à anneau résonant comportant :

  • un port d'entrée raccordé optiquement à la seconde sortie du diviseur de puissance (22) pour recevoir le second signal optique à moduler,
  • un port de sortie apte à délivrer un second signal optique modulé construit en modulant l'intensité du signal optique reçu sur son port d'entrée entre seulement un niveau haut et un niveau bas,
  • un port de commande apte à recevoir un second signal binaire de commande en réponse auquel le second modulateur à anneau résonant fait varier l'intensité du signal optique reçu sur son port d'entrée entre les niveaux haut et bas pour obtenir le second signal optique modulé,

- un premier assembleur optique (62) comportant :

  • une première entrée (60) raccordée optiquement à l'un des premier et second ports de sortie du premier modulateur (32) à anneau résonant pour recevoir le premier signal optique modulé,
  • une seconde entrée (80) raccordée optiquement au port de sortie du second modulateur à anneau résonant pour recevoir le second signal optique modulé, et
  • une sortie pour restituer un premier signal optique combiné construit en combinant les champs optiques des signaux optiques reçus sur les première et seconde entrées du premier assembleur optique,

- un second assembleur optique (126) comportant :

  • une première entrée (124) raccordée optiquement à la sortie du premier assembleur optique (62),
  • une seconde entrée (125) raccordée optiquement à l'autre des premier et second ports de sortie du premier modulateur à anneau résonant, et
  • une sortie apte à délivrer le signal optique dont l'intensité est modulée sur quatre niveaux différents construit en combinant les signaux optiques reçus sur ses première et seconde entrées.

3. Dispositif selon la revendication 1 ou 2, dans lequel pour au moins l'un des premier et second assembleurs optiques (62, 126), le dispositif comporte :

- un déphaseur optique (72, 118) commandable raccordé à l'une des entrées de cet assembleur optique de manière à être traversé par le signal optique qui est combiné par cet assembleur optique avec le signal optique reçu sur l'autre de ses entrées, ce déphaseur optique étant apte à modifier la phase du signal optique qui le traverse d'une quantité prédéterminée fixée par un signal d'ajustement,
- un capteur (86, 130) apte à mesurer l'intensité du signal optique restituée sur la sortie de cet assembleur optique, et
- un circuit électronique (150) configuré pour acquérir l'intensité mesurée par le capteur et pour générer en fonction de l'intensité mesurée acquise un signal d'ajustement du déphaseur qui maximise l'intensité du signal délivré sur la sortie de l'assembleur optique.

4. Dispositif selon l'une quelconque des revendications précédentes, dans lequel pour au moins l'un des modulateurs (32, 102 ; 210-212) à anneau résonant, le dispositif comporte :

- un accordeur électrique (40, 109) apte à modifier pour une valeur constante du signal de commande de ce modulateur, la longueur d'onde $\lambda_0$ pour laquelle la fonction de transfert entre les intensités des signaux optiques reçus sur les ports d'entrée et de sortie de ce modulateur à anneau résonant présente un minimum, cet accordeur électrique étant apte à décaler cette longueur d'onde $\lambda_0$ d'une quantité prédéterminée fixée par un signal de réglage,
- un capteur (44, 110) de l'intensité du signal optique délivré sur un port de sortie de ce modulateur à anneau, et
- un circuit électronique (150) configuré pour acquérir l'intensité mesurée par le capteur et pour générer, en fonction de cette intensité mesurée acquise, un signal de réglage qui minimise l'intensité délivrée sur ce port de sortie.

5. Dispositif selon l'une quelconque des revendications précédente, dans lequel :

- les premier et second modulateurs (210) à anneau résonant sont aptes à moduler l'intensité d'un signal optique à une longueur $\lambda_1$ et, simultanément, incapable de moduler l'intensité d'un signal optique à une longueur d'onde $\lambda_2$ espacée de la longueur d'onde $\lambda_1$ par au moins 1 nm,
- le dispositif comporte également des troisième et quatrième modulateurs (211, 212) à anneau résonant aptes à moduler l'intensité d'un signal optique à la longueur d'onde $\lambda_2$ et, simultanément, incapable de moduler l'intensité d'un signal optique à la longueur d'onde $\lambda_1$, le troisième modulateur (211, 212) à anneau résonant étant raccordé optiquement en série avec le premier modulateur (210) à anneau résonant pour former un premier bloc (202) de modulation apte à moduler l'intensité du premier signal optique à moduler à la fois aux longueurs d'onde $\lambda_1$ et $\lambda_2$, le quatrième modulateur (211, 212) à anneau résonant étant raccordé optiquement en série avec le deuxième modulateur (210) à anneau résonant pour former un deuxième bloc (204) de modulation apte à moduler l'intensité du signal optique construit à partir du second signal optique à moduler à la fois aux longueurs d'onde $\lambda_1$ et $\lambda_2$.

6. Dispositif selon la revendication 5, dans lequel, dans le sens de circulation du signal optique, les modulateurs (210-212) à anneau résonant du deuxième bloc (204) sont disposés dans l'ordre inverse des modulateurs (210-212) du premier bloc (202).

7. Dispositif selon la revendication 1, dans lequel le second port (36) de sortie du premier modulateur (32) à anneau résonant et le port (106) de sortie du second modulateur (102) à anneau résonant sont tous les deux des ports « Drop » d'un modulateur à anneau résonant.

8. Dispositif selon l'une quelconque des revendications précédentes, dans lequel les assembleurs optiques (62, 130) sont des assembleurs optiques MMI (Multi-Mode Interference) à seulement deux entrées et une sortie.

9. Dispositif selon l'une quelconque des revendications précédentes, dans lequel le diviseur de puissance (22) est agencé pour diviser à part égal l'intensité du signal optique reçu sur son entrée de sorte que les intensités des premier et second signaux optiques à moduler sont égales.

10. Dispositif selon l'une quelconque des revendications précédentes, dans lequel le diviseur de puissance (22) est un assembleur MMI (Multi-Mode Interference) à seulement une entrée et deux sorties.

**Patentansprüche**

1. Vorrichtung zur Modulation der Stärke eines optischen Signals auf vier verschiedenen Pegeln, **dadurch gekennzeichnet, dass** diese Vorrichtung aufweist:

- einen Leistungsteiler (22), der einen Eingang (20) zum Empfang des zu modulierenden optischen Ausgangssignals und erste und zweite Ausgänge (24, 26) aufweist, die je erste und zweite zu modulierende optische Signale liefern, wobei die Stärke jedes dieser ersten und zweiten zu modulierenden optischen Signale gleich einem Bruchteil ungleich Null der Stärke des am Eingang (20) des Leistungsteilers empfangenen optischen Ausgangssignals ist,
- einen ersten Ringresonator-Modulator (32; 210-212), der aufweist:

• einen Eingangsport (30), der optisch an den ersten Ausgang (24) des Leistungsteilers (22) angeschlossen ist, um das erste zu modulierende optische Signal zu empfangen,
• einen ersten Ausgangsport (34), der ein erstes in seiner Stärke moduliertes optisches Signal liefern kann, das gebildet wird, indem die Stärke des am Eingangsport (30) empfangenen optischen Signals zwischen nur einem hohen Pegel und einem niedrigen Pegel moduliert wird,
• einen Steuerport (38), der ein erstes binäres Steuersignal empfangen kann, als Reaktion worauf der erste Ringresonator-Modulator die Stärke des ersten zu modulierenden optischen Signals zwischen den hohen und niedrigen Pegeln variiert, um das erste modulierte optische Signal zu erhalten,
• einen zweiten Ausgangsport (36), der ein optisches Signal komplementär zum ersten modulierten optischen Signal liefern kann, wobei die Stärke des komplementären optischen Signals auf dem niedrigen Pegel ist, wenn die Stärke des ersten modulierten optischen Signals auf dem hohen Pegel ist und umgekehrt,

- einen ersten optischen Assembler (62), der aufweist:

• einen ersten Eingang (60), der optisch an den ersten Ausgangsport des ersten Ringresonator-Modulators (32) angeschlossen ist, um das erste modulierte optische Signal zu empfangen,
• einen zweiten Eingang (80), der optisch an den zweiten Ausgang des Leistungsteilers (22) angeschlossen ist, und
• einen Ausgang (82), um ein erstes kombiniertes optisches Signal wiederzugeben, das gebildet wird, indem die optischen Felder der an den ersten und zweiten Eingängen des ersten Assemblers empfangenen optischen Signale kombiniert werden,

- einen zweiten Ringresonator-Modulator (102; 210-212), der aufweist:

• einen Eingangsport (100), der optisch an den Ausgang (82) des ersten optischen Assemblers angeschlossen ist, um das erste kombinierte optische Signal zu empfangen,
• einen Ausgangsport (104, 106), der ein zweites moduliertes optisches Signal liefern kann, das gebildet wird, indem die Stärke des an seinem Eingangsport empfangenen optischen Signals zwischen nur einem hohen Pegel und einem niedrigen Pegel moduliert wird,
• einen Steuerport (108), der ein zweites binäres Steuersignal empfangen kann, als Reaktion worauf der zweite Ringresonator-Modulator die Stärke des an seinem Eingangsport empfangenen optischen Signals zwischen dem hohen und dem niedrigen Pegel variiert, um das zweite modulierte optische Signal zu erhalten,

- einen zweiten optischen Assembler (126), der aufweist:

• einen ersten Eingang (124), der optisch an den Ausgangsport des zweiten Ringresonator-Modulators angeschlossen ist,
• einen zweiten Eingang (125), der optisch an den zweiten Ausgangsport des ersten Ringresonator-Modulators angeschlossen ist, und
• einen Ausgang (128), der das optische Signal liefern kann, dessen Stärke über vier unterschiedliche Pegel moduliert wird, gebildet durch Kombination der an seinen ersten und zweiten Eingängen empfangenen optischen Signale.

2. Vorrichtung zur Modulation der Stärke eines optischen Signals auf vier verschiedenen Pegeln, **dadurch gekennzeichnet, dass** diese Vorrichtung aufweist:

- einen Leistungsteiler (22), der einen Eingang (20) zum Empfang des zu modulierenden optischen Ausgangssignals und erste und zweite Ausgänge aufweist, die je erste und zweite zu modulierende optische Signale liefern, wobei die Stärke jedes dieser ersten und zweiten zu modulierenden optischen Signale gleich einem Bruchteil ungleich Null der Stärke des am Eingang des Leistungsteilers empfangenen optischen Ausgangssignals ist,
- einen ersten Ringresonator-Modulator (32), der aufweist:

• einen Eingangsport, der optisch an den ersten Ausgang des Leistungsteilers (22) angeschlossen ist, um das erste zu modulierende optische Signal zu empfangen,

• einen ersten Ausgangsport, der ein erstes in seiner Stärke moduliertes optisches Signal liefern kann, das gebildet wird, indem die Stärke des am Eingangsport empfangenen optischen Signals zwischen nur einem hohen Pegel und einem niedrigen Pegel moduliert wird,

• einen Steuerport, der ein erstes binäres Steuersignal empfangen kann, als Reaktion worauf der erste Ringresonator-Modulator die Stärke des ersten zu modulierenden optischen Signals zwischen den hohen und niedrigen Pegeln variiert, um das erste modulierte optische Signal zu erhalten,

• einen zweiten Ausgangsport, der ein optisches Signal komplementär zum ersten modulierten optischen Signal liefern kann, wobei die Stärke des komplementären optischen Signals auf dem niedrigen Pegel ist, wenn die Stärke des ersten modulierten optischen Signals auf dem hohen Pegel ist und umgekehrt,

- einen zweiten Ringresonator-Modulator (102), der aufweist:

• einen Eingangsport, der optisch an den zweiten Ausgang des Leistungsteilers (22) angeschlossen ist, um das zweite zu modulierende optische Signal zu empfangen,

• einen Ausgangsport, der ein zweites moduliertes optisches Signal liefern kann, das gebildet wird, indem die Stärke des an seinem Eingangsport empfangenen optischen Signals zwischen nur einem hohen Pegel und einem niedrigen Pegel moduliert wird,

• einen Steuerport, der ein zweites binäres Steuersignal empfangen kann, als Reaktion worauf der zweite Ringresonator-Modulator die Stärke des an seinem Eingangsport empfangenen optischen Signals zwischen den hohen und niedrigen Pegeln variiert, um das zweite modulierte optische Signal zu erhalten,

- einen ersten optischen Assembler (62), der aufweist:

• einen ersten Eingang (60), der optisch an einen der ersten und zweiten Ausgangsports des ersten Ringresonator-Modulators (32) angeschlossen ist, um das erste modulierte optische Signal zu empfangen,

• einen zweiten Eingang (80), der optisch an den Ausgangsport des zweiten Ringresonator-Modulators angeschlossen ist, um das zweite modulierte optische Signal zu empfangen, und

• einen Ausgang, um ein erstes kombiniertes optisches Signal wiederzugeben, das durch Kombination der optischen Felder der an den ersten und zweiten Eingängen des ersten optischen Assemblers empfangenen optischen Signale gebildet wird,

- einen zweiten optischen Assembler (126), der aufweist:

• einen ersten Eingang (124), der optisch an den Ausgang des ersten optischen Assemblers (62) angeschlossen ist,

• einen zweiten Eingang (125), der optisch an den anderen der ersten und zweiten Ausgangsports des ersten Ringresonator-Modulators angeschlossen ist, und

• einen Ausgang, der das optische Signal liefern kann, dessen Stärke auf vier verschiedenen Pegeln moduliert ist, das durch Kombination der an seinen ersten und zweiten Eingängen empfangenen optischen Signale gebildet wird.

**3.** Vorrichtung nach Anspruch 1 oder 2, wobei die Vorrichtung für mindestens einen der ersten und zweiten optischen Assembler (62, 126) aufweist:

- einen steuerbaren optischen Phasenschieber (72, 118), der an einen der Eingänge dieses optischen Assemblers so angeschlossen ist, dass er von dem optischen Signal durchquert wird, das von diesem optischen Assembler mit dem am anderen seiner Eingänge empfangenen optischen Signal kombiniert wird, wobei dieser optische Phasenschieber die Phase des ihn durchquerenden optischen Signals um eine vorbestimmte Menge ändern kann, die von einem Anpassungssignal festgelegt wird,

- einen Sensor (86, 130), der die Stärke des am Ausgang dieses optischen Assemblers wiedergegebenen optischen Signals messen kann, und

- einen elektronischen Schaltkreis (150), der konfiguriert ist, die vom Sensor gemessene Stärke zu erfassen und abhängig von der erfassten gemessenen Stärke ein Anpassungssignal des Phasenschiebers zu erzeugen, das die Stärke des am Ausgang des optischen Assemblers gelieferten Signals maximiert.

**4.** Vorrichtung nach einem der vorhergehenden Ansprüche, wobei die Vorrichtung für mindestens einen der Ringresonator-Modulatoren (32, 102; 210-212) aufweist:

- eine elektrische Abstimmvorrichtung (40, 109), die für einen konstanten Wert des Steuersignals dieses Modulators die Wellenlänge $\lambda_0$ ändern kann, bei der die Transferfunktion zwischen den Stärken der an den Eingangs- und Ausgangsports dieses Ringresonator-Modulators empfangenen optischen Signale ein Minimum aufweist, wobei diese elektrische Abstimmvorrichtung diese Wellenlänge $\lambda_0$ um eine vorbestimmte Menge verschieben kann, die von einem Einstellsignal festgelegt wird,
- einen Sensor (44, 110) der Stärke des an einem Ausgangsport dieses Ringmodulators gelieferten optischen Signals, und
- einen elektronischen Schaltkreis (150), der konfiguriert ist, die vom Sensor gemessene Stärke zu erfassen, und abhängig von dieser erfassten gemessenen Stärke ein Einstellsignal zu erzeugen, das die an diesem Ausgangsport gelieferte Stärke minimiert.

5. Vorrichtung nach einem der vorhergehenden Ansprüche, wobei:

- die ersten und zweiten Ringresonator-Modulatoren (210) die Stärke eines optischen Signals auf eine Länge $\lambda_1$ modulieren können, und gleichzeitig unfähig sind, die Stärke eines optischen Signals auf eine Wellenlänge $\lambda_2$ zu modulieren, die einen Abstand von mindestens 1 nm zur Wellenlänge $\lambda_1$ hat,
- die Vorrichtung ebenfalls dritte und vierte Ringresonator-Modulatoren (211, 212) aufweist, die die Stärke eines optischen Signals auf die Wellenlänge $\lambda_2$ modulieren können, und gleichzeitig unfähig sind, die Stärke eines optischen Signals auf die Wellenlänge $\lambda_1$ zu modulieren, wobei der dritte Ringresonator-Modulator (211, 212) optisch mit dem ersten Ringresonator-Modulator (210) in Reihe geschaltet ist, um einen ersten Modulationsblock (202) zu bilden, der die Stärke des ersten zu modulierenden optischen Signals gleichzeitig auf die Wellenlängen $\lambda_1$ und $\lambda_2$ modulieren kann, wobei der vierte Ringresonator-Modulator (211, 212) optisch mit dem zweiten Ringresonator-Modulator (210) in Reihe geschaltet ist, um einen zweiten Modulationsblock (204) zu bilden, der die Stärke des ausgehend vom zweiten zu modulierenden optischen Signal gebildeten optischen Signals auf die Wellenlängen $\lambda_1$ und $\lambda_2$ modulieren kann.

6. Vorrichtung nach Anspruch 5, wobei, in Bewegungsrichtung des optischen Signals, die Ringresonator-Modulatoren (210-212) des zweiten Blocks (204) in umgekehrter Reihenfolge zu den Modulatoren (210-212) des ersten Blocks (202) angeordnet sind.

7. Vorrichtung nach Anspruch 1, wobei der zweite Ausgangsport (36) des ersten Ringresonator-Modulators (32) und der Ausgangsport (106) des zweiten Ringresonator-Modulators (102) beide "Drop"-Ports eines Ringresonator-Modulators sind.

8. Vorrichtung nach einem der vorhergehenden Ansprüche, wobei die optischen Assembler (62, 130) optische MMI-Assembler (Multi-Mode Interference) mit nur zwei Eingängen und einem Ausgang sind.

9. Vorrichtung nach einem der vorhergehenden Ansprüche, wobei der Leistungsteiler (22) eingerichtet ist, um die Stärke des an seinem Eingang empfangenen optischen Signals zu gleichen Teilen zu teilen, so dass die Stärken der ersten und zweiten zu modulierenden optischen Signale gleich sind.

10. Vorrichtung nach einem der vorhergehenden Ansprüche, wobei der zu modulierenden Leistungsteiler (22) ein MMI-Assembler (Multi-Mode Interference) mit nur einem Eingang und zwei Ausgängen ist.

**Claims**

1. Device for modulating the intensity of an optical signal on four different levels, **characterised in that** this device comprises:

- a power divider (22) comprising an input (20) to receive the initial optical signal to be modulated and first and second outputs (24, 26) which each deliver, respectively, first and second optical signals to be modulated, the intensity of each of these first and second optical signals to be modulated being equal to a non-zero fraction of the intensity of the initial optical signal received on the input (20) of the power divider,
- a first resonant ring modulator (32; 210 - 212) comprising:

  • an input port (30) optically coupled to the first output (24) of the power divider (22) to receive the first optical signal to be modulated,

• a first output port (34) capable of delivering a first intensity-modulated optical signal, constructed by modulating the intensity of the optical signal received on the input port (30) between only a high level and a low level,

• a control port (38) capable of receiving a first binary control signal in response to which the first resonant ring modulator varies the intensity of the first optical signal to be modulated between the high and low levels to obtain the first modulated optical signal,

• a second output port (36) capable of delivering an optical signal complementary to the first modulated optical signal, the intensity of the complementary optical signal being at the low level when the intensity of the first modulated optical signal is at the high level and vice versa,

- a first optical assembler (62) comprising:

 • a first input (60) optically coupled to the first output port of the first resonant ring modulator (32) to receive the first modulated optical signal,

 • a second input (80) optically coupled to the second output of the power divider (22), and

 • an output (82) for restoring a first combined optical signal constructed by combining the optical fields of the optical signals received on the first and second inputs of the first optical assembler,

- a second resonant ring modulator (102; 210 - 212) comprising:

 • an input port (100) optically coupled to the output (82) of the first optical assembler to receive the first combined optical signal,

 • an output port (104, 106) capable of delivering a second modulated optical signal constructed by modulating the intensity of the optical signal received on its input port between only a high level and a low level,

 • a control port (108) capable of receiving a second binary control signal in response to which the second resonant ring modulator varies the intensity of the optical signal received on its input port between the high and low levels to obtain the second modulated optical signal,

- a second optical assembler (126) comprising:

 • a first input (124) optically coupled to the output port of the second resonant ring modulator,

 • a second input (125) optically coupled to the second output port of the first resonant ring modulator, and

 • an output (128) capable of delivering the optical signal of which the intensity is modulated on four different levels constructed by combining the optical signals received on its first and second inputs.

2. Device for modulating the intensity of an optical signal on four different levels, **characterised in that** this device comprises:

- a power divider (22) comprising an input to receive the initial optical signal to be modulated and first and second outputs which each deliver, respectively, first and second optical signals to be modulated, the intensity of each of these first and second optical signals to be modulated being equal to a non-zero fraction of the intensity of the initial optical signal received on the input of the power divider,

- a first resonant ring modulator (32) comprising:

 • an input port optically coupled to the first output of the power divider (22) to receive the first optical signal to be modulated,

 • a first output port capable of delivering a first intensity-modulated optical signal, constructed by modulating the intensity of the optical signal received on the input port between only a high level and a low level,

 • a control port capable of receiving a first binary control signal in response to which the first resonant ring modulator varies the intensity of the first optical signal to be modulated between the high and low levels to obtain the first modulated optical signal,

 • a second output port capable of delivering an optical signal complementary to the first modulated optical signal, the intensity of the complementary optical signal being at the low level when the intensity of the first modulated optical signal is at the high level and vice versa,

- a second resonant ring modulator (102) comprising:

 • an input port optically coupled to the second output of the power divider (22) to receive the second optical signal to be modulated,
• an output port capable of delivering a second modulated optical signal constructed by modulating the intensity of the optical signal received on its input port between only a high level and a low level,
• a control port capable of receiving a second binary control signal in response to which the second resonant ring modulator varies the intensity of the optical signal received on its input port between the high and low levels to obtain the second modulated optical signal,

- a first optical assembler (62) comprising:

• a first input (60) optically coupled to one of the first and second output ports of the first resonant ring modulator (32) to receive the first modulated optical signal,
• a second input (80) optically coupled to the output port of the second resonant ring modulator to receive the second modulated optical signal, and
• an output for restoring a first combined optical signal constructed by combining the optical fields of the optical signals received on the first and second inputs of the first optical assembler,

- a second optical assembler (126) comprising:

• a first input (124) optically coupled to the output of the first optical assembler (62),
• a second input (125) optically coupled to the other of the first and second output ports of the first resonant ring modulator, and
• an output capable of delivering the optical signal of which the intensity is modulated on four different levels constructed by combining the optical signals received on its first and second inputs.

3.  Device according to Claim 1 or 2, in which, for at least one of the first and second optical assemblers (62, 126), the device comprises:

- a controllable optical phase-shifter (72, 118) coupled to one of the inputs of this optical assembler so as to be passed through by the optical signal which is combined by this optical assembler with the optical signal received on the other of its inputs, this optical phase-shifter being capable of modifying the phase of the optical signal which passes through it by a predetermined quantity set by an adjustment signal,
- a sensor (86, 130) capable of measuring the intensity of the optical signal restored on the output of this optical assembler, and
- an electronic circuit (150) configured to acquire the intensity measured by the sensor and to generate, as a function of the acquired measured intensity, a phase-shifter adjustment signal which maximises the intensity of the signal delivered on the output of the optical assembler.

4.  Device according to any one of the preceding claims, in which, for at least one of the resonant ring modulators (32, 102; 210-212) the device comprises:

- an electrical tuner (40, 109) capable of modifying, for a constant value of the control signal of this modulator, the wavelength $\lambda_0$ for which the transfer function between the intensities of the optical signals received on the input and output ports of this resonant ring modulator exhibits a minimum, this electrical tuner being capable of shifting this wavelength $\lambda_0$ by a predetermined quantity set by a setting signal,
- a sensor (44, 110) of the intensity of the optical signal delivered on an output port of this ring modulator, and
- an electronic circuit (150) configured to acquire the intensity measured by the sensor and to generate, as a function of this acquired measured intensity, a setting signal which minimises the intensity delivered on this output port.

5.  Device according to any one of the preceding claims, in which:

- the first and second resonant ring modulators (210) are capable of modulating the intensity of an optical signal at a length $\lambda_1$ and, simultaneously, incapable of modulating the intensity of an optical signal at a wavelength $\lambda_2$ spaced apart from the wavelength $\lambda_1$ by at least 1 nm,
- the device also comprises third and fourth resonant ring modulators (211, 212) capable of modulating the intensity of an optical signal at the wavelength $\lambda_2$ and, simultaneously, incapable of modulating the intensity of an optical signal at the wavelength $\lambda_1$, the third resonant ring modulator (211, 212) being optically coupled in series with the first resonant ring modulator (210) to form a first modulation block (202) capable of modulating the intensity of the first optical signal to be modulated at the same time as the wavelengths $\lambda_1$ and $\lambda_2$, the fourth resonant ring modulator (211, 212) being optically coupled in series with the second resonant ring modulator (210) to form a second modulation block (204) capable of modulating the intensity of the optical signal constructed from the second optical signal to be modulated at the same time as the wavelengths $\lambda_1$ and $\lambda_2$.

6. Device according to Claim 5, in which, in the direction of circulation of the optical signal, the resonant ring modulators (210-212) of the second block (204) are arranged in the reverse order to the modulators (210-212) of the first block (202).

7. Device according to Claim 1, in which the second output port (36) of the first resonant ring modulator (32) and the output port (106) of the second resonant ring modulator (102) are both "Drop" ports of a resonant ring modulator.

8. Device according to any one of the preceding claims, in which the optical assemblers (62, 130) are MMI (Multi-Mode Interference) optical assemblers with only two inputs and one output.

9. Device according to any one of the preceding claims, in which the power divider (22) is arranged to divide into equal parts the intensity of the optical signal received on its input such that the intensities of the first and second optical signals to be modulated are equal.

10. Device according to any one of the preceding claims, in which the power divider (22) is an MMI (Multi-Mode Interference) assembler with only one input and two outputs.

Fig. 1

Fig. 2

Fig. 3

Fig. 4

Fig. 5

Fig. 6

Fig. 7

Fig. 8

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008219614 A1
- US 2015316794 A1
- EP 2843468 A
- EP 1782123 A

**Littérature non-brevet citée dans la description**

- **DUBRAY O. et al.** 20 Gb/s PAM-4 transmission from 20 to 90°C by modulating a silicon ring resonator modulator with 2V. Optical Society of America, Mars 2015
- Data rate enhancement of dual silicon ring resonator carrier-injection modulators by PAM-4 encoding. **SEYEDI M. ASHKAN et al.** 2015 International Conférence on Photonics in switching. IEEE, 22 Septembre 2015, 363-365
- **C. S. HSIAO et al.** Design for beam splitting components employing silicon-on-insulator rib waveguide structures. *Optics letter, C.S.,* 01 Décembre 2005, vol. 30 (23
- **NICHOLAS C. HARRIS et al.** Efficient, compact and low loss thermo-optic phase shifter in silicon. *Optics Express,* 2014
- **LUCAS B. SOLDANO et al.** Optical multi-mode interference devices based on self-imaging : principles and applications. *Journal of Lightwave Technology,* Avril 1995, vol. 13 (4